# EUROPÄISCHE PATENTANMELDUNG

(11) **EP 4 718 324 A1**
(43) Veröffentlichungstag der Anmeldung: **01.04.2026**
(21) Anmeldenummer: 24202643.3
(22) Anmeldetag: 25.09.2024
(51) Int. Cl.: G06N 3/0455, G06N 3/088, G06N 3/09

(54) **TRAINING EINES TOKENIZER-NETZWERKS ZUR UNTERSTÜTZUNG DES TRAININGS VON TRANSFORMER-NETZWERKEN AUF PUNKTWOLKEN**

(71) Anmelder: Robert Bosch GmbH, 70442 Stuttgart (DE)
(72) Erfinder: Kapelner, Tamas, 31139 Hildesheim (DE)

(57) **Zusammenfassung**

Verfahren (100) zum Trainieren eines Tokenizer-Netzwerks (2), das vektorielle Repräsentationen von Punktwolken von Messdaten im Raum dieser Repräsentationen quantisiert, wobei diese Punktwolken diskreten Punkten im Raum jeweils Messwerte einer oder mehrerer Messgrößen zuordnen, mit den Schritten:
• es werden Trainings-Beispiele (3) von Punktwolken von Messdaten bereitgestellt (110);
• diese Trainings-Beispiele (3) werden mit einem Encoder-Netzwerk (1) in vektorielle Repräsentationen (1a) überführt (120);
• diese vektoriellen Repräsentationen (1a) werden mit dem zu trainierenden Tokenizer-Netzwerk (2) quantisiert (130);
• aus den quantisierten vektoriellen Repräsentationen (2a) werden mit einer Decoder-Anordnung (4) aus einem oder mehreren weiteren Netzwerken (4', 4") Cluster oder sonstige Anhäufungen (4a) von Punkten in der Punktwolke des jeweiligen Trainings-Beispiels (3), und/oder Verarbeitungsprodukte (4b) solcher Cluster oder Anhäufungen (4a), ermittelt (140);
• es wird mit einer vorgegebenen Kostenfunktion (5) gemessen (150), inwieweit diese Cluster bzw. Anhäufungen (4a) mit der ursprünglichen Punktwolke im Einklang stehen; und
• mindestens Parameter (2b), die das Verhalten des Tokenizer-Netzwerks (2) charakterisieren, werden auf das Ziel optimiert (160), die Bewertung (5a) durch die Kostenfunktion (5) zu verbessern.

## Beschreibung

Die vorliegende Erfindung betrifft das Training neuronaler Transformer-Netzwerke auf Punktwolken, und hier insbesondere auf dünn besetzten und verrauschten Punktwolken, wie sie bei der Umfeldüberwachung von Fahrzeugen und Robotern auftreten.

### Stand der Technik

Neuronale Transformer-Netzwerke eignen sich besonders gut für die Verarbeitung von Sequenzen von Eingaben. Sie werden daher für die Verarbeitung von Sprache genutzt, aber auch beispielsweise für eine Vielzahl von Aufgaben im Bereich der Computer Vision, also beispielsweise Bildklassifikation oder semantische Segmentierung.

Die Eingaben, die ein Transformer-Netzwerk erhält, werden in der Regel in vektorielle Repräsentationen überführt, die als Aneinanderreihung sogenannter "Token" mit einer oder mehreren Vektorkomponenten zu verstehen sind. Beim Training von Transformer-Netzwerken werden häufig einzelne "Token" in einem Trainings-Beispiel "maskiert", d.h. außer Acht gelassen oder unkenntlich gemacht. Das Transformer-Netzwerk wird dann darauf trainiert, diese "maskierten" Token vorherzusagen.

Bei der Verarbeitung von Sprache als Eingabe ist es auf Grund des insgesamt begrenzten Wortschatzes in diesem Zusammenhang nicht weiter schwierig, zu prüfen, ob die "maskierten" Token in der Ausgabe des Transformer-Netzwerks enthalten sind. Wenn die Eingabe hingegen beispielsweise Bilder umfasst, ist es üblich, die für den Vergleich mit der Ausgabe des Transformer-Netzwerks herangezogene vektorielle Repräsentation mit einem sogenannten Tokenizer-Netzwerk in einen eingeschränkten Raum von Möglichkeiten zu quantisieren. Ein solches Tokenizer-Netzwerk benötigt wiederum ein Training.

### Offenbarung der Erfindung

Die Erfindung stellt ein Verfahren zum Trainieren eines Tokenizer-Netzwerks bereit. Dieses Tokenizer-Netzwerk quantisiert vektorielle Repräsentationen von Punktwolken von Messdaten im Raum dieser Repräsentationen. Die Punktwolken ordnen diskreten Punkten im Raum jeweils Messwerte einer oder mehrerer Messgrößen zu. Bei Radar- oder Lidar-Reflexen kann beispielsweise jeder Punkt im Raum mit einer Intensität eines reflektierten Strahls, einer Richtung dieses reflektierten Strahls und weiteren interessierenden Größen annotiert sein.

Im Rahmen des Verfahrens werden Trainings-Beispiele von Punktwolken von Messdaten bereitgestellt. Diese Trainings-Beispiele werden mit einem Encoder-Netzwerk in vektorielle Repräsentationen (auch "Embeddings" genannt) überführt. Diese vektoriellen Repräsentationen können insbesondere beispielsweise eine geringere Dimensionalität haben als die Trainings-Beispiele. Hierbei kann "eine geringere Dimensionalität haben" insbesondere beispielsweise bedeuten, dass die vektoriellen Repräsentationen von weniger Variablen abhängen als die ursprünglichen Punktwolken.

Die vektoriellen Repräsentationen ("Embeddings") werden mit dem zu trainierenden Tokenizer-Netzwerk quantisiert. Aus den so erhaltenen quantisierten vektoriellen Repräsentationen werden mit einer Decoder-Anordnung aus einem oder mehreren weiteren Netzwerken Cluster oder sonstige Anhäufungen von Punkten in der Punktwolke des jeweiligen Trainings-Beispiels, und/oder Verarbeitungsprodukte solcher Cluster oder Anhäufungen, ermittelt.

Es wird nun mit einer vorgegebenen Kostenfunktion ermittelt, inwieweit diese Cluster bzw. Anhäufungen mit der ursprünglichen Punktwolke im Einklang stehen. Dies ist ggfs. auch an Verarbeitungsprodukten, die aus den Clustern bzw. Anhäufungen erhalten wurden, ersichtlich.

Mindestens Parameter, die das Verhalten des Tokenizer-Netzwerks charakterisieren, werden auf das Ziel optimiert, die Bewertung durch die Kostenfunktion zu verbessern.

Es wurde erkannt, dass auf diese Weise speziell bei der Nutzung auf Punktwolken, die bei der Umfeldüberwachung von Fahrzeugen und/oder Robotern entstehen, als Trainings-Beispiele ein unüberwachtes Training ohne manuelles "Labeln" der Trainings-Beispiele realisiert werden kann. Bei dieser Umfeldüberwachung kommt es typischerweise darauf an, dass große räumliche Bereiche abgedeckt werden, um eine komplette Szenerie (wie insbesondere beispielsweise eine Verkehrssituation) zu erfassen. Zugleich gibt es in der Regel auch eine Relativbewegung zwischen dem für die Aufnahme der Punktwolken verwendeten Sensor einerseits und der beobachteten Szenerie andererseits. Diese Relativbewegung bewirkt ein starkes Rauschen in den Messdaten der Punktwolken. Die Notwendigkeit, eine komplette Szenerie zu erfassen, bewirkt weiterhin, dass die Punktwolke viele Objekte enthält und die Punktwolke zugleich vergleichsweise dünn (sparse) besetzt ist. Daher sind einzelne Objekte in diesen Punktwolken vergleichsweise schwer zu erkennen. Der Test, ob die Decoder-Anordnung plausible Cluster oder sonstige Anhäufungen ermittelt, ist für Punktwolken dieser Herkunft somit ein deutlich besserer Gradmesser dafür, ob das zu trainierende Tokenizer-Netzwerk gut arbeitet.

Durch die verbesserte Möglichkeit, das Tokenizer-Netzwerk zu trainieren, kann wiederum das Training eines Transformer-Netzwerks verbessert werden. In der Folge kann dann das Transformer-Netzwerk auch auf Punktwolken, die bei der Umfeldüberwachung von Fahrzeugen oder Robotern anfallen, besser arbeiten. Dadurch funktioniert diese Umfeldüberwachung besser. Somit leistet das hier vorgeschlagene Training eines Tokenizer-Netzwerks einen erheblichen Beitrag dazu, dass das Fahrzeug, bzw. der Roboter, sich in einem vorgegebenen Umfeld besser bewegen kann.

In einer besonders vorteilhaften Ausgestaltung werden zusätzlich auch Parameter, die das Verhalten des Encoder-Netzwerks charakterisieren, und/oder Parameter, die das Verhalten der Decoder-Anordnung charakterisieren, auf das Ziel optimiert, die Bewertung durch die Kostenfunktion zu verbessern. Auf diese Weise kann nicht nur die Leistung des Encoder-Netzwerks bzw. der Decoder-Anordnung bezüglich der Erkennung von Clustern bzw. sonstigen Anhäufungen verbessert werden, sondern es kann auch weiterer Lernfortschritt des hauptsächlich zu trainierenden Tokenizer-Netzwerks angeregt werden. Die Kombination aus dem trainierten Encoder-Netzwerk und dem trainierten Tokenizer-Netzwerk kann beim späteren Training eines Transformer-Netzwerks weiter genutzt werden, um dem Transformer-Netzwerk geeignete Trainings-Beispiele vorzulegen. Hierauf wird später noch eingegangen.

In einer weiteren besonders vorteilhaften Ausgestaltung wird die Punktwolke des Trainings-Beispiels mit einer vorgegebenen alternativen Methode auf Cluster bzw. Anhäufungen untersucht. Es wird dann gemessen, inwieweit diese Cluster bzw. Anhäufungen mit den von der Decoder-Anordnung ermittelten Clustern bzw. Anhäufungen übereinstimmen. Wie zuvor erläutert, erfasst diese Art der Messung genau diejenigen Merkmale, die an Punktwolken aus der Umfeldüberwachung von Fahrzeugen bzw. Robotern besonders gut zu erkennen sind.

Beispielsweise kann die vorgegebene alternative Methode k-means-Clustern in eine vorgegebene Anzahl k von Clustern umfassen. Die vorgegebene Anzahl k der Cluster kann dann beispielsweise als Hyperparameter verwendet werden, der im Verlauf des Trainings ebenfalls optimiert wird.

In einer weiteren besonders vorteilhaften Ausgestaltung werden aus den mit der alternativen Methode ermittelten Clustern bzw. Anhäufungen Bounding-Boxen ermittelt, die diese Cluster bzw. Anhäufungen umschreiben. Zugleich ist die Decoder-Anordnung dazu ausgebildet, Objekte zu erkennen, die zu Clustern bzw. Anhäufungen von Punkten korrespondieren. Die Decoder-Anordnung kann insbesondere beispielsweise dazu ausgebildet sein, zu den erkannten Objekten ebenfalls Bounding-Boxen anzugeben. Diese Bounding-Boxen können dann besonders gut mit den Bounding-Boxen verglichen werden, die zu den mit der alternativen Methode ermittelten Clustern bzw. Anhäufungen korrespondieren, wie beispielsweise mit der "mean intersection over union", mloU.

In einer weiteren besonders vorteilhaften Ausgestaltung umfasst das Encoder-Netzwerk ein oder mehrere PointNet-Architekturen. In einer jeden solchen PointNet-Architektur werden alle Punkte einer eingegebenen Punktwolke von mindestens einem gemeinsamen mehrschichtigen Perzeptron verarbeitet. Auf diese Weise ist eine PointNet-Architektur dazu geeignet, sowohl lokale als auch globale Merkmale aus einer Punktwolke mit beliebiger Orientierung zu extrahieren.

Wie zuvor erläutert, werden in einer weiteren besonders vorteilhaften Ausgestaltung Trainings-Beispiele mit Punktwolken gewählt, deren Punkte Orte repräsentieren, von denen ein Radar- oder Lidar-Abfragestrahl reflektiert worden ist. Diese Art von Punktwolken hat im praktischen Messbetrieb eine besondere Tendenz dazu, dünn besetzt zu sein und im Wesentlichen Cluster oder andere Anhäufungen als wesentliche Merkmale aufzuweisen. Die üblicherweise für das Training von Tokenizern verwendeten Trainingsverfahren tun sich mit dieser Art von Trainingsdaten schwer. Das hier vorgeschlagene Verfahren ist speziell dafür ausgelegt, gerade diese Art von Trainingsdaten zu nutzen und das Tokenizer-Netzwerk auch auf den späteren Wirkbetrieb mit Daten dieser Struktur vorzubereiten.

Dies gilt insbesondere in einer weiteren besonders vorteilhaften Ausgestaltung, in der Trainings-Beispiele mit Punktwolken gewählt werden, deren Messdaten von mindestens einem an einem Fahrzeug und/oder Roboter mitgeführten Sensor aufgenommen wurden. Wie zuvor erläutert, tritt gerade bei dieser Art von Punktwolken wegen der Relativbewegung zwischen dem Sensor einerseits und der beobachteten Szenerie andererseits besonders viel Rauschen auf. Auch muss gerade in dieser Anwendung ein besonders großes räumliches Gebiet überwacht werden, um auf alle für die künftige Trajektorienplanung des Fahrzeugs bzw. Roboters wichtigen Objekte und/oder Ereignisse rechtzeitig reagieren zu können.

In einer weiteren besonders vorteilhaften Ausgestaltung werden weitere Trainings-Bespiele von Punktwolken von Messdaten bereitgestellt. Diese Trainings-Beispiele werden mit dem trainierten Encoder-Netzwerk in vektorielle Repräsentationen überführt. Diese vektoriellen Repräsentationen werden mit dem trainierten Tokenizer-Netzwerk quantisiert.

Es werden ausgedünnte Versionen der vektoriellen Repräsentationen erzeugt, indem ein oder mehrere Komponenten maskiert werden. Als Maskieren ist in diesem Zusammenhang jeder Ersatz durch einen Platzhalter-Wert geeignet, der den ursprünglichen Wert der Komponente nicht mehr erkennen lässt, aber noch erkennen lässt, dass an der entsprechenden Stelle ein Wert fehlt. Die ausgedünnte Version der vektoriellen Repräsentation ist dann eine Art "numerischer Lückentext", der vom zu trainierenden Transformer-Netzwerk ausgefüllt werden soll.

Zu diesem Zweck werden die ausgedünnten Versionen einem zu trainierenden Transformer-Netzwerk zugeführt. Es wird mit einer weiteren Transformer-Kostenfunktion, die sich auf das Training des Transformer-Netzwerks bezieht, gemessen, inwieweit die Ausgabe des zu trainierenden Transformer-Netzwerks die in den ausgedünnten Versionen maskierten Komponenten enthält - ob also die "Lücken" im numerischen "Lückentext" korrekt ausgefüllt sind. Für diese Messung werden die quantisierten, aber nicht ausgedünnten vektoriellen Repräsentationen herangezogen. Optional kann die Kostenfunktion zusätzlich noch messen, inwieweit die nicht maskierten Komponenten der ausgedünnten vektoriellen Repräsentation unverändert bleiben, also ob das Transformer-Netzwerk wirklich nur die "Lücken" im "Lückentext" ausfüllt und den "Text" nicht komplett umschreibt.

Parameter, die das Verhalten des zu trainierenden Transformer-Netzwerks charakterisieren, werden auf das Ziel optimiert, dass die Bewertung durch die weitere Kostenfunktion verbessert wird. Der fertig optimierte Zustand dieser Parameter charakterisiert den fertig trainierten Zustand des Transformer-Netzwerks. Das Transformer-Netzwerk wird dadurch in die Lage versetzt, Aufgaben (Tasks) auf Punktwolken als Eingabe-Daten zu lösen.

Insbesondere lässt sich das Transformer-Netzwerk mit dem hier vorgeschlagenen Verfahren unabhängig von einem konkreten Task in generischer Weise vortrainieren. Es lässt sich also auf einer großen Menge von Trainings-Beispielen, die nicht mit tatsächlich in den jeweiligen Szenerien vorhandenen Objekten oder sonstigem Vorwissen ("ground truth") annotiert ("gelabelt") sein müssen, unüberwacht trainieren. Durch das "Ausfüllen" numerischer "Lückentexte" kann das Transformer-Netzwerk somit bereits all diejenigen Grundfertigkeiten lernen, die nicht für einen konkreten Task spezifisch sind. Es kann dann also als "Foundation-Modell" dienen, das sich durch ein anschließendes Task-spezifisches Training an einen konkreten Task anpassen lässt. Dies ist ein Stück weit analog zu "Foundation-Modellen", die auf großen Mengen von Texten oder Bildern generisch vortrainiert sind und für viele Aufgaben im Bereich der Sprachverarbeitung, bzw. der "Computer Vision", genutzt werden können. Insbesondere beim Einsatz eines Modells für mehrere unterschiedliche Tasks genügt es, jeweils ausgehend vom Trainingsstand des vortrainierten "Foundation-Modells" die Anpassung an den neuen Task vorzunehmen. Dies erfordert einen deutlich geringeren Aufwand an Rechenaufwand und an Trainings-Beispielen als ein komplett neues Training von Anfang an. Insbesondere sind jeweils weniger auf den jeweiligen Task "gelabelte" Trainings-Beispiele für ein überwachtes task-spezifisches Training erforderlich.

Somit werden in einer weiteren besonders vorteilhaften Ausgestaltung weitere Trainings-Beispiele von Punktwolken von Messdaten bereitgestellt. Diese weiteren Trainings-Beispiele sind mit jeweiligen Soll-Ausgaben gelabelt, die das zu trainierende Transformer-Netzwerk aus ihnen erzeugen soll. Die Soll-Ausgaben beziehen sich auf eine konkrete Aufgabe (Task), die das zu trainierende Transformer-Netzwerk lösen soll.

Die weiteren gelabelten Trainings-Beispiele werden von dem zu trainierenden Transformer-Netzwerk zu Ausgaben verarbeitet. Abweichungen dieser Ausgaben von den jeweiligen Soll-Ausgaben werden mit einer weiteren vorgegebenen Task-Kostenfunktion bewertet. Parameter, die das Verhalten des zu trainierenden Transformer-Netzwerks charakterisieren, werden auf das Ziel optimiert, dass die Bewertung durch die weitere Task-Kostenfunktion verbessert wird.

Das Training im Hinblick auf den konkreten Task kann beispielsweise in beliebiger Form mit dem unüberwachten Training anhand ausgedünnter Versionen vektorieller Repräsentationen von Punktwolken kombiniert werden. Wie zuvor erläutert, ist es jedoch auch vorteilhaft, das Transformer-Netzwerk zunächst generisch und unüberwacht (bzw. selbstüberwacht) mit ausgedünnten Versionen vektorieller Repräsentationen von Punktwolken vorzutrainieren und dann dieses generisch vortrainierte Transformer-Netzwerk mit in Bezug auf einen bestimmten Task gelabelten Trainings-Beispielen für diesen Task weiter zu trainieren. Ein generisches Vortraining kann dann als Ausgangsbasis für immer neue Tasks immer wieder verwendet werden.

Somit ermöglicht es das hier vorgeschlagene Verfahren im Endeffekt, das für Sprachmodelle und bildverarbeitende Modelle bewährte Konzept des generischen Vortrainings und anschließenden Task-spezifischen Trainings auch auf Transformer-Netzwerke anzuwenden, die Punktwolken als Eingabe-Daten verarbeiten.

Das zu trainierende Transformer-Netzwerk kann insbesondere beispielsweise dazu ausgebildet sein,
- einer eingegebenen Punktwolke oder Teilen hiervon Klassifikations-Scores in Bezug auf eine oder mehrere Klassen einer vorgegebenen Klassifikation zuzuordnen; und/oder
- die eingegebene Punktwolke semantisch zu segmentieren; und/oder
- Objekte in der eingegebenen Punktwolke zu erkennen; und/oder
- anhand der eingegebenen Punktwolke mindestens eine Aktion zu identifizieren, die mindestens eine Entität ausführt.

Dies sind Aufgaben, die bei der Umfeldüberwachung von Fahrzeugen und/oder Robotern besonders häufig anfallen. Zugleich eignen sich gerade Transformer-Netzwerke besonders gut zur Lösung dieser Aufgaben - wenn sie denn ein hinreichendes Training bekommen haben. Für dieses hinreichende Training sorgt das hier vorgeschlagene Verfahren.

In einer weiteren besonders vorteilhaften Ausgestaltung werden dem trainierten Transformer-Netzwerk Punktwolken von Messdaten zugeführt, die mit mindestens einem Sensor aufgenommen wurden. Aus der Ausgabe des trainierten Transformer-Netzwerks wird ein Ansteuersignal ermittelt. Ein Fahrzeug, ein Fahrassistenzsystem, ein Roboter, ein System zur Qualitätskontrolle, ein System zur Überwachung von Bereichen, und/oder ein System zur medizinischen Bildgebung, wird mit dem Ansteuersignal angesteuert. Durch das verbesserte Training des Transformer-Netzwerks ist die Wahrscheinlichkeit erhöht, dass die auf das Ansteuersignal ausgeführte Reaktion des jeweils angesteuerten technischen Systems der jeweiligen in den Punktwolken von Messdaten verkörperten Situation angemessen ist.

In diesem Zusammenhang ist es besonders vorteilhaft, dass sich das Transformer-Netzwerk speziell auf Punktwolken, die eine ganze Szenerie umfassen und einzelne Objekte nicht notwendigerweise gleich erkennen lassen, besser trainieren lässt. Gängige "Foundation-Modelle", die auf Punktwolken arbeiten, sind auf die dreidimensionale Rekonstruktion einzelner Objekte trainiert. Für die Beurteilung einer Verkehrssituation, in der sich das Fahrzeug, bzw. der Roboter, befindet, ist jedoch die Bewertung der Situation als Ganzes wichtig. So sind beispielsweise die Möglichkeiten, wie sich ein Verkehrsteilnehmer als Nächstes verhalten kann, häufig durch das Vorhandensein anderer Verkehrsteilnehmer eingeschränkt.

Daher decken in einer weiteren besonders vorteilhaften Ausgestaltung die Punktwolken von Messdaten, die mit dem mindestens einen Sensor aufgenommen wurden, ein räumliches Umfeld, in dem sich das Fahrzeug bzw. der Roboter bewegt, mit einer Ausdehnung von mindestens 50 Metern, bevorzugt von mindestens 100 Metern, in mindestens einer Raumrichtung ab. Diese Ausdehnung ist ausreichend, um eine Verkehrssituation zur Gänze erfassen zu können. Wenn dann die jeweilige Ausdehnung insbesondere beispielsweise höchstens 200 Meter weit reicht, ist dies vorteilhaft in Bezug auf die Auflösung, mit der Details dieser Verkehrssituation analysiert werden können.

Das Verfahren können insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Trainieren eines Tokenizer-Netzwerks 2;
Figur 2 Schematische Veranschaulichung der Verarbeitungskette während des Trainings.

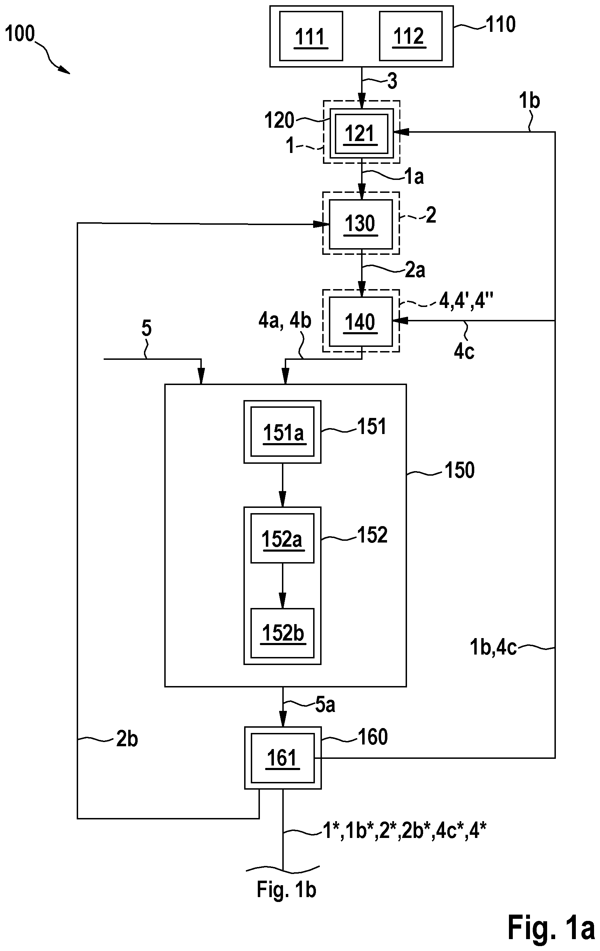

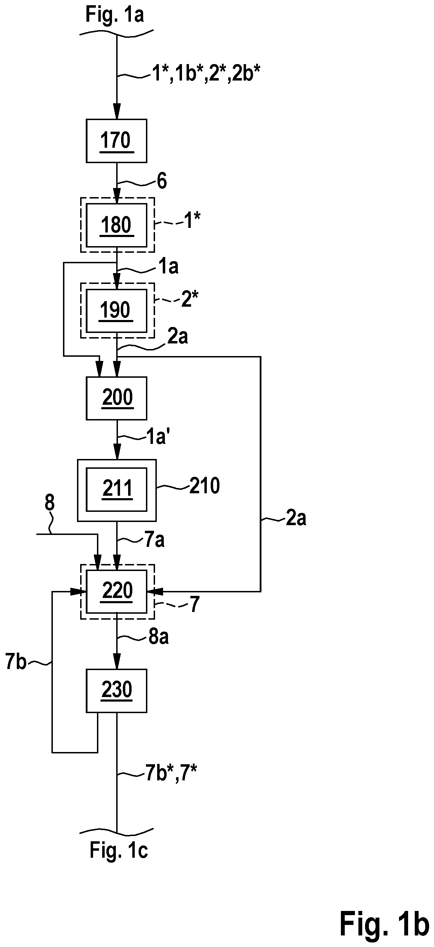

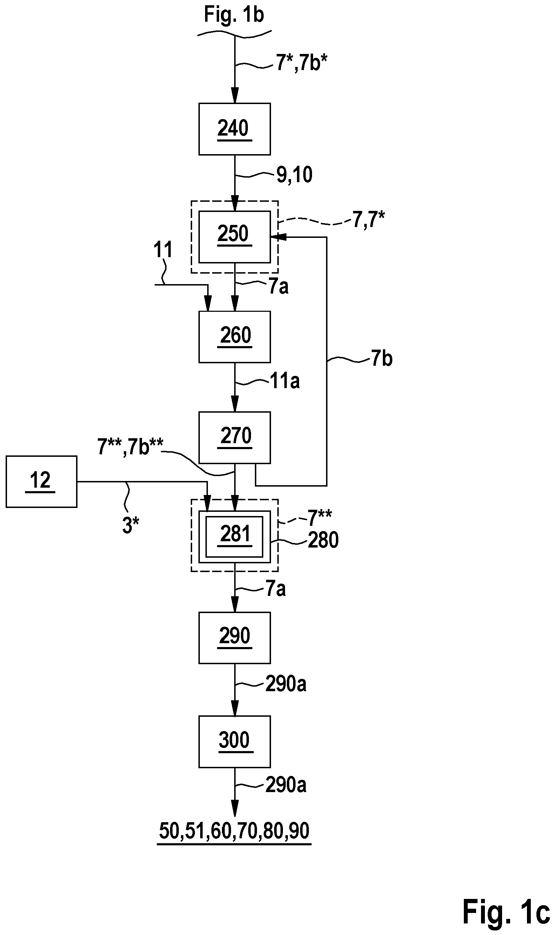

Figur 1 ist ein schematisches Ablaufdiagramm eines Ausführungsbeispiels des Verfahrens 100 zum Trainieren eines Tokenizer-Netzwerks 2. Dieses Tokenizer-Netzwerk 2 quantisiert vektorielle Repräsentationen von Punktwolken von Messdaten im Raum dieser Repräsentationen. Die Punktwolken ordnen diskreten Punkten im Raum jeweils Messwerte einer oder mehrerer Messgrößen zu.

In Schritt 110 werden Trainings-Beispiele 3 von Punktwolken von Messdaten bereitgestellt.

Gemäß Block 111 können insbesondere beispielsweise Trainings-Beispiele 3 mit Punktwolken gewählt werden, deren Punkte Orte repräsentieren, von denen ein Radar- oder Lidar-Abfragestrahl reflektiert worden ist.

Alternativ oder in Kombination hierzu können gemäß Block 112 insbesondere beispielsweise Trainings-Beispiele 3 mit Punktwolken gewählt werden, deren Messdaten von mindestens einem an einem Fahrzeug 50 und/oder Roboter 60 mitgeführten Sensor aufgenommen wurden.

In Schritt 120 werden die Trainings-Beispiele 3 werden mit einem Encoder-Netzwerk 1 in vektorielle Repräsentationen 1a überführt. Diese vektoriellen Repräsentationen 1a haben in dem in Figur 1 gezeigten Beispiel eine geringere Dimensionalität als die Trainings-Beispiele 3. Dies ist jedoch im Allgemeinen nicht zwingend erforderlich.

Gemäß Block 121 kann das Encoder-Netzwerk 1 insbesondere beispielsweise ein oder mehrere PointNet-Architekturen umfassen. In jeder PointNet-Architektur werden jeweils alle Punkte einer eingegebenen Punktwolke von mindestens einem gemeinsamen mehrschichtigen Perzeptron verarbeitet.

In Schritt 130 werden die vektoriellen Repräsentationen 1a mit dem zu trainierenden Tokenizer-Netzwerk 2 quantisiert.

In Schritt 140 werden mit einer Decoder-Anordnung 4, die aus einem oder mehreren Netzwerken 4', 4" besteht, aus den quantisierten vektoriellen Repräsentationen Cluster oder sonstige Anhäufungen 4a von Punkten in der Punktwolke des jeweiligen Trainings-Beispiels 3, und/oder Verarbeitungsprodukte 4b solcher Cluster oder Anhäufungen 4a, ermittelt.

In Schritt 150 wird mit einer vorgegebenen Kostenfunktion 5 gemessen, inwieweit diese Cluster bzw. Anhäufungen 4a mit der ursprünglichen Punktwolke im Einklang stehen. Es entsteht eine Bewertung 5a.

Gemäß Block 151 kann die Punktwolke des Trainings-Beispiels 3 mit einer vorgegebenen alternativen Methode auf Cluster bzw. Anhäufungen untersucht werden. Es kann dann gemäß Block 152 gemessen werden, inwieweit diese Cluster bzw. Anhäufungen mit den von der Decoder-Anordnung 4 ermittelten Clustern bzw. Anhäufungen 4a übereinstimmen.

Hierbei kann gemäß Block 151a die vorgegebene alternative Methode insbesondere beispielsweise k-means-Clustern in eine vorgegebene Anzahl k von Clustern umfassen.

Gemäß Block 152a können aus den mit der alternativen Methode ermittelten Clustern bzw. Anhäufungen Bounding-Boxen ermittelt werden, die diese Cluster bzw. Anhäufungen umschreiben. Die Decoder-Anordnung 4 kann dann gemäß Block 152b dazu ausgebildet sein, Objekte zu erkennen, die zu Clustern bzw. Anhäufungen von Punkten korrespondieren.

In Schritt 160 werden mindestens Parameter 2b, die das Verhalten des Tokenizer-Netzwerks 2 charakterisieren, auf das Ziel optimiert, die Bewertung 5a durch die Kostenfunktion 5 zu verbessern. Es entstehen
- ein fertig optimierter Zustand 1b* der Parameter 1b, der den fertig trainierten Zustand 1* des Encoder-Netzwerks 1 festlegt;
- ein fertig optimierter Zustand 2b* der Parameter 2b, der den fertig trainierten Zustand 2* des Tokenizer-Netzwerks festlegt; und
- ein fertig optimierter Zustand 4c* der Parameter 4c, der den fertig trainierten Zustand 4* der Decoder-Anordnung 4 festlegt.

Gemäß Block 161 können zusätzlich auch Parameter 1b, die das Verhalten des Encoder-Netzwerks 1 charakterisieren, und/oder Parameter 4c, die das Verhalten der Decoder-Anordnung 4 charakterisieren, auf das Ziel optimiert werden, die Bewertung 5a durch die Kostenfunktion 5 zu verbessern.

Im Folgenden werden nur noch das trainierte Encoder-Netzwerk 1* und das trainierte Tokenizer-Netzwerk 2* weiter verwendet. Die trainierte Decoder-Anordnung 4* hat ihren Zweck erfüllt, nachdem das Tokenizer-Netzwerk 2 fertig trainiert worden ist.

In dem in Figur 1 gezeigten Beispiel wird ab Schritt 170 mit einem generischen, unüberwachten bzw. selbstüberwachten Training eines Transformer-Netzwerks 7 fortgefahren.

In Schritt 170 werden weitere Trainings-Bespiele 6 von Punktwolken von Messdaten bereitgestellt.

In Schritt 180 werden diese Trainings-Beispiele 6 mit dem trainierten Encoder-Netzwerk 1* in vektorielle Repräsentationen 1a überführt.

In Schritt 190 werden diese vektoriellen Repräsentationen 1a mit dem trainierten Tokenizer-Netzwerk 2* quantisiert.

In Schritt 200 werden ausgedünnte Versionen 1a' der vektoriellen Repräsentationen 1a erzeugt, indem ein oder mehrere Komponenten maskiert werden. Diese ausgedünnten Versionen 1a' wurden nicht zuvor durch das trainierte Tokenizer-Netzwerk 2* quantisiert.

In Schritt 210 werden diese ausgedünnten Versionen 1a' einem zu trainierenden Transformer-Netzwerk 7, 7* zugeführt.

Gemäß Block 211 kann insbesondere beispielsweise ein zu trainierendes Transformer-Netzwerk 7, 7* gewählt werden, das dazu ausgebildet ist,
- einer eingegebenen Punktwolke oder Teilen hiervon Klassifikations-Scores in Bezug auf eine oder mehrere Klassen einer vorgegebenen Klassifikation zuzuordnen; und/oder
- die eingegebene Punktwolke semantisch zu segmentieren; und/oder
- Objekte in der eingegebenen Punktwolke zu erkennen; und/oder
- anhand der eingegebenen Punktwolke mindestens eine Aktion zu identifizieren, die mindestens eine Entität ausführt.

In Schritt 220 wird mit einer weiteren Transformer-Kostenfunktion 8 gemessen, inwieweit die Ausgabe 7a des zu trainierenden Transformer-Netzwerks 7 die in den ausgedünnten Versionen 1a' maskierten Komponenten enthält. Für diese Messung werden die quantisierten vektoriellen Repräsentationen 2a herangezogen. Dies kann insbesondere beispielsweise beinhalten, dass die vom Transformer-Netzwerk 7 für die maskierten Komponenten vorhergesagten Werte mit den quantisierten Werten der entsprechenden Komponenten in den quantisierten vektoriellen Repräsentationen 2a verglichen werden. Es entsteht eine Bewertung 8a.

In Schritt 230 werden Parameter 7b, die das Verhalten des zu trainierenden Transformer-Netzwerks 7 charakterisieren, auf das Ziel optimiert, dass die Bewertung 8a durch die weitere Transformer-Kostenfunktion 8 verbessert wird. Der hierbei erhaltene fertig optimierte Zustand 7b* der Parameter 7b legt den generisch vortrainierten Zustand 7* des Transformer-Netzwerks 7 fest.

In dem in Figur 1 gezeigten Beispiel wird ab Schritt 240 mit dem für eine vorgegebene Aufgabe (Task) spezifischen Training des generisch vortrainierten Transformer-Netzwerks 7* fortgefahren.

In Schritt 240 werden weitere Trainings-Beispiele 9 von Punktwolken von Messdaten bereitgestellt. Diese weiteren Trainings-Beispiele 9 sind mit jeweiligen Soll-Ausgaben 10 gelabelt, die das zu trainierende Transformer-Netzwerk 7* aus ihnen erzeugen soll. Somit ist das Task-spezifische Training ein überwachtes Training.

In Schritt 250 werden diese weiteren Trainings-Beispiele 9 von dem zu trainierenden Transformer-Netzwerk 7* zu Ausgaben 7a verarbeitet.

In Schritt 260 werden Abweichungen dieser Ausgaben 7a von den jeweiligen Soll-Ausgaben 10 mit einer weiteren vorgegebenen Task-Kostenfunktion 11 bewertet. Es entsteht eine Bewertung 11a.

In Schritt 270 werden Parameter 7b, die das Verhalten des zu trainierenden Transformer-Netzwerks 7* charakterisieren, auf das Ziel optimiert, dass die Bewertung 11a durch die weitere Task-Kostenfunktion 11 verbessert wird. Der fertig optimierte Zustand 7b** der Parameter 7b legt den task-spezifisch fertig trainierten Zustand 7** des zu trainierenden Transformer-Netzwerks 7 fest.

In dem in Figur 1 gezeigten Beispiel wird ab Schritt 280 mit der konkreten Nutzung dieses fertig trainierten Transformer-Netzwerks 7** an Messdaten fortgefahren.

In Schritt 280 werden dem trainierten Transformer-Netzwerk 7** Punktwolken 3* von Messdaten zugeführt, die mit mindestens einem Sensor 12 aufgenommen wurden.

In Schritt 290 wird aus der Ausgabe 7a des trainierten Transformer-Netzwerks 7** ein Ansteuersignal 290a ermittelt.

In Schritt 300 wird ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 290a angesteuert.

Gemäß Block 281 können die Punktwolken 3* ein räumliches Umfeld, in dem sich das Fahrzeug 50 bzw. der Roboter 60 bewegt, mit einer Ausdehnung von mindestens 50 Metern, bevorzugt von mindestens 100 Metern, in mindestens einer Raumrichtung abdecken.

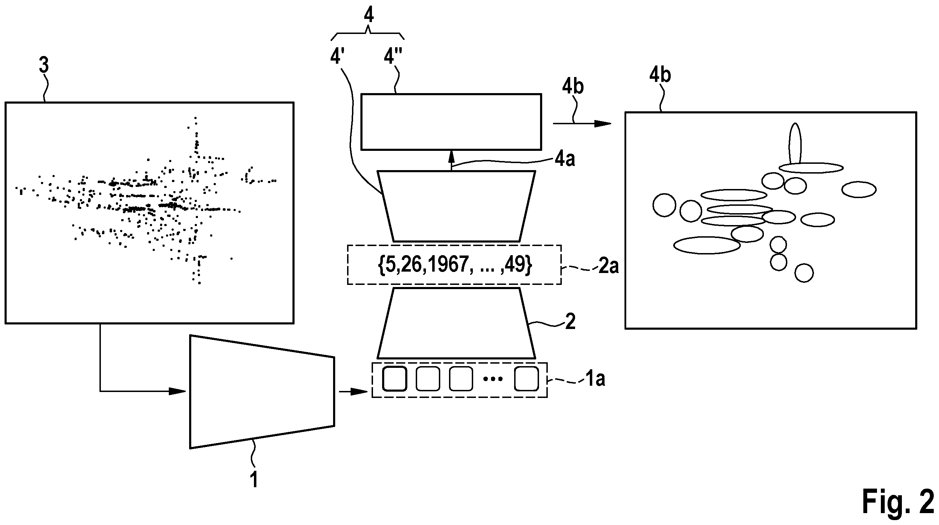

Figur 2 veranschaulicht schematisch die Verarbeitung eines Trainings-Beispiels 3 einer Punktwolke von Messdaten während des Trainings des Tokenizer-Netzwerks 2, das optional auch mit einem Training des Encoder-Netzwerks 1 und/oder mit einem Training der Decoder-Anordnung 4 kombiniert werden kann.

Die Punktwolke 3 wird von dem Encoder-Netzwerk 1 zu einer vektoriellen Repräsentation 1a verarbeitet. Diese vektorielle Repräsentation 1a wird mit dem Tokenizer-Netzwerk 2 quantisiert. Die so erhaltene quantisierte vektorielle Repräsentation 2a wird von einem Decoder-Netzwerk 4' auf Cluster oder sonstige Anhäufungen 4a von Punkten untersucht. Aus diesen Clustern bzw. Anhäufungen 4a wird mit einem Objekt-Detektor 4" auf Objekte untersucht. Damit entstehen aus den Clustern bzw. Anhäufungen 4a "Pseudo-Objekte" als Verarbeitungsprodukt 4b. Diese "Pseudo-Objekte" werden daraufhin überprüft, ob sie mit der ursprünglichen Punktwolke 3 in Einklang stehen. Das Decoder-Netzwerk 4' und der Objekt-Detektor 4" bilden zusammen die Decoder-Anordnung 4.

## Patentansprüche

1. Verfahren (100) zum Trainieren eines Tokenizer-Netzwerks (2), das vektorielle Repräsentationen von Punktwolken von Messdaten im Raum dieser Repräsentationen quantisiert, wobei diese Punktwolken diskreten Punkten im Raum jeweils Messwerte einer oder mehrerer Messgrößen zuordnen, mit den Schritten:
• es werden Trainings-Beispiele (3) von Punktwolken von Messdaten bereitgestellt (110);
• diese Trainings-Beispiele (3) werden mit einem Encoder-Netzwerk (1) in vektorielle Repräsentationen (1a) überführt (120);
• diese vektoriellen Repräsentationen (1a) werden mit dem zu trainierenden Tokenizer-Netzwerk (2) quantisiert (130);
• aus den quantisierten vektoriellen Repräsentationen (2a) werden mit einer Decoder-Anordnung (4) aus einem oder mehreren weiteren Netzwerken (4', 4") Cluster oder sonstige Anhäufungen (4a) von Punkten in der Punktwolke des jeweiligen Trainings-Beispiels (3), und/oder Verarbeitungsprodukte (4b) solcher Cluster oder Anhäufungen (4a), ermittelt (140);
• es wird mit einer vorgegebenen Kostenfunktion (5) gemessen (150), inwieweit diese Cluster bzw. Anhäufungen (4a) mit der ursprünglichen Punktwolke im Einklang stehen; und
• mindestens Parameter (2b), die das Verhalten des Tokenizer-Netzwerks (2) charakterisieren, werden auf das Ziel optimiert (160), die Bewertung (5a) durch die Kostenfunktion (5) zu verbessern.

2. Verfahren (100) nach Anspruch 1, wobei zusätzlich auch Parameter (1b), die das Verhalten des Encoder-Netzwerks (1) charakterisieren, und/oder Parameter (4c), die das Verhalten der Decoder-Anordnung (4) charakterisieren, auf das Ziel optimiert werden (161), die Bewertung (5a) durch die Kostenfunktion (5) zu verbessern.

3. Verfahren (100) nach einem der Ansprüche 1 bis 2, wobei
• die Punktwolke des Trainings-Beispiels (3) mit einer vorgegebenen alternativen Methode auf Cluster bzw. Anhäufungen untersucht wird (151) und
• gemessen wird (152), inwieweit diese Cluster bzw. Anhäufungen mit den von der Decoder-Anordnung (4) ermittelten Clustern bzw. Anhäufungen (4a) übereinstimmen.

4. Verfahren (100) nach Anspruch 3, wobei die vorgegebene alternative Methode k-means-Clustern in eine vorgegebene Anzahl k von Clustern umfasst (151a).

5. Verfahren (100) nach einem der Ansprüche 3 bis 4, wobei
• aus den mit der alternativen Methode ermittelten Clustern bzw. Anhäufungen Bounding-Boxen ermittelt werden (152a), die diese Cluster bzw. Anhäufungen umschreiben; und
• die Decoder-Anordnung (4) dazu ausgebildet ist (152b), Objekte zu erkennen, die zu Clustern bzw. Anhäufungen von Punkten korrespondieren.

6. Verfahren (100) nach einem der Ansprüche 1 bis 5, wobei das Encoder-Netzwerk (1) ein oder mehrere PointNet-Architekturen umfasst (121), in der bzw. denen alle Punkte einer eingegebenen Punktwolke von mindestens einem gemeinsamen mehrschichtigen Perzeptron verarbeitet werden.

7. Verfahren (100) nach einem der Ansprüche 1 bis 6, wobei Trainings-Beispiele (3) mit Punktwolken gewählt werden (111), deren Punkte Orte repräsentieren, von denen ein Radar- oder Lidar-Abfragestrahl reflektiert worden ist.

8. Verfahren (100) nach einem der Ansprüche 1 bis 7, wobei Trainings-Beispiele (3) mit Punktwolken gewählt werden (112), deren Messdaten von mindestens einem an einem Fahrzeug (50) und/oder Roboter (60) mitgeführten Sensor aufgenommen wurden.

9. Verfahren (100) nach einem der Ansprüche 1 bis 8, wobei
• weitere Trainings-Bespiele (6) von Punktwolken von Messdaten bereitgestellt werden (170);
• diese Trainings-Beispiele (6) mit dem trainierten Encoder-Netzwerk (1*) in vektorielle Repräsentationen (1a) überführt werden (180);
• diese vektoriellen Repräsentationen (1a) mit dem trainierten Tokenizer-Netzwerk (2*) quantisiert werden (190);
• ausgedünnte Versionen (1a') der vektoriellen Repräsentationen (1a) erzeugt werden (200), indem ein oder mehrere Komponenten maskiert werden;
• diese ausgedünnten Versionen (1a') einem zu trainierenden Transformer-Netzwerk (7) zugeführt werden (210);
• mit einer weiteren Transformer-Kostenfunktion (8) gemessen wird (220), inwieweit die Ausgabe (7a) des zu trainierenden Transformer-Netzwerks (7) die in den ausgedünnten Versionen (1a') maskierten Komponenten enthält, wobei für diese Messung die quantisierten vektoriellen Repräsentationen (2a) herangezogen werden; und
• Parameter (7b), die das Verhalten des zu trainierenden Transformer-Netzwerks (7) charakterisieren, auf das Ziel optimiert werden (230), dass die Bewertung (8a) durch die weitere Transformer-Kostenfunktion (8) verbessert wird.

10. Verfahren (100) nach Anspruch 9, wobei
• weitere Trainings-Beispiele (9) von Punktwolken von Messdaten bereitgestellt werden (240), wobei diese weiteren Trainings-Beispiele (9) mit jeweiligen Soll-Ausgaben (10) gelabelt sind, die das zu trainierende Transformer-Netzwerk (7*) aus ihnen erzeugen soll;
• diese weiteren Trainings-Beispiele (9) von dem zu trainierenden Transformer-Netzwerk (7*) zu Ausgaben (7a) verarbeitet werden (250);
• Abweichungen dieser Ausgaben (7a) von den jeweiligen Soll-Ausgaben (10) mit einer weiteren vorgegebenen Task-Kostenfunktion (11) bewertet werden (260) und
• Parameter (7b), die das Verhalten des zu trainierenden Transformer-Netzwerks (7*) charakterisieren, auf das Ziel optimiert werden (270), dass die Bewertung (11a) durch die weitere Task-Kostenfunktion (11) verbessert wird.

11. Verfahren (100) nach einem der Ansprüche 9 bis 10, wobei ein zu trainierendes Transformer-Netzwerk (7, 7*) gewählt wird (211), das dazu ausgebildet ist,
• einer eingegebenen Punktwolke oder Teilen hiervon Klassifikations-Scores in Bezug auf eine oder mehrere Klassen einer vorgegebenen Klassifikation zuzuordnen; und/oder
• die eingegebene Punktwolke semantisch zu segmentieren; und/oder
• Objekte in der eingegebenen Punktwolke zu erkennen; und/oder
• anhand der eingegebenen Punktwolke mindestens eine Aktion zu identifizieren, die mindestens eine Entität ausführt.

12. Verfahren (100) nach einem der Ansprüche 9 bis 11, wobei
• dem trainierten Transformer-Netzwerk (7**) Punktwolken (3*) von Messdaten zugeführt werden (280), die mit mindestens einem Sensor (12) aufgenommen wurden;
• aus der Ausgabe (7a) des trainierten Transformer-Netzwerks (7**) ein Ansteuersignal (290a) ermittelt wird (290); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (290a) angesteuert wird (300).

13. Verfahren (100) nach Anspruch 12, wobei die Punktwolken (3*) ein räumliches Umfeld, in dem sich das Fahrzeug (50) bzw. der Roboter (60) bewegt, mit einer Ausdehnung von mindestens 50 Metern, bevorzugt von mindestens 100 Metern, in mindestens einer Raumrichtung abdecken (281).

14. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 13 auszuführen.

15. Maschinenlesbarer Datenträger und/oder Downloadprodukt mit dem Computerprogramm nach Anspruch 14.

16. Ein oder mehrere Computer und/oder Compute-Instanzen mit dem Computerprogramm nach Anspruch 14, und/oder mit dem maschinenlesbaren Datenträger und/oder Downloadprodukt nach Anspruch 15.

## Geänderte Patentansprüche

### Geänderte Patentansprüche gemäss Regel 137(2) EPÜ.

1. Verfahren (100) zum Trainieren eines Tokenizer-Netzwerks (2), das vektorielle Repräsentationen von Punktwolken von Messdaten im Raum dieser Repräsentationen quantisiert, wobei diese Punktwolken diskreten Punkten im Raum jeweils Messwerte einer oder mehrerer Messgrößen zuordnen, mit den Schritten:
• es werden Trainings-Beispiele (3) von Punktwolken von Messdaten bereitgestellt (110), wobei Trainings-Beispiele (3) mit Punktwolken gewählt werden (111), deren Punkte Orte repräsentieren, von denen ein Radar- oder Lidar-Abfragestrahl reflektiert worden ist;
• diese Trainings-Beispiele (3) werden mit einem Encoder-Netzwerk (1) in vektorielle Repräsentationen (1a) überführt (120);
• diese vektoriellen Repräsentationen (1a) werden mit dem zu trainierenden Tokenizer-Netzwerk (2) quantisiert (130);
• aus den quantisierten vektoriellen Repräsentationen (2a) werden mit einer Decoder-Anordnung (4) aus einem oder mehreren weiteren Netzwerken (4', 4") Cluster oder sonstige Anhäufungen (4a) von Punkten in der Punktwolke des jeweiligen Trainings-Beispiels (3), und/oder Verarbeitungsprodukte (4b) solcher Cluster oder Anhäufungen (4a), ermittelt (140);
• es wird mit einer vorgegebenen Kostenfunktion (5) gemessen (150), inwieweit diese Cluster bzw. Anhäufungen (4a) mit der ursprünglichen Punktwolke im Einklang stehen; und
• mindestens Parameter (2b), die das Verhalten des Tokenizer-Netzwerks (2) charakterisieren, werden auf das Ziel optimiert (160), die Bewertung (5a) durch die Kostenfunktion (5) zu verbessern.

2. Verfahren (100) nach Anspruch 1, wobei zusätzlich auch Parameter (1b), die das Verhalten des Encoder-Netzwerks (1) charakterisieren, und/oder Parameter (4c), die das Verhalten der Decoder-Anordnung (4) charakterisieren, auf das Ziel optimiert werden (161), die Bewertung (5a) durch die Kostenfunktion (5) zu verbessern.

3. Verfahren (100) nach einem der Ansprüche 1 bis 2, wobei
• die Punktwolke des Trainings-Beispiels (3) mit einer vorgegebenen alternativen Methode auf Cluster bzw. Anhäufungen untersucht wird (151) und
• gemessen wird (152), inwieweit diese Cluster bzw. Anhäufungen mit den von der Decoder-Anordnung (4) ermittelten Clustern bzw. Anhäufungen (4a) übereinstimmen.

4. Verfahren (100) nach Anspruch 3, wobei die vorgegebene alternative Methode k-means-Clustern in eine vorgegebene Anzahl k von Clustern umfasst (151a).

5. Verfahren (100) nach einem der Ansprüche 3 bis 4, wobei
• aus den mit der alternativen Methode ermittelten Clustern bzw. Anhäufungen Bounding-Boxen ermittelt werden (152a), die diese Cluster bzw. Anhäufungen umschreiben; und
• die Decoder-Anordnung (4) dazu ausgebildet ist (152b), Objekte zu erkennen, die zu Clustern bzw. Anhäufungen von Punkten korrespondieren.

6. Verfahren (100) nach einem der Ansprüche 1 bis 5, wobei das Encoder-Netzwerk (1) ein oder mehrere PointNet-Architekturen umfasst (121), in der bzw. denen alle Punkte einer eingegebenen Punktwolke von mindestens einem gemeinsamen mehrschichtigen Perzeptron verarbeitet werden.

7. Verfahren (100) nach einem der Ansprüche 1 bis 6, wobei Trainings-Beispiele (3) mit Punktwolken gewählt werden (112), deren Messdaten von mindestens einem an einem Fahrzeug (50) und/oder Roboter (60) mitgeführten Sensor aufgenommen wurden.

8. Verfahren (100) nach einem der Ansprüche 1 bis 7, wobei
• weitere Trainings-Bespiele (6) von Punktwolken von Messdaten bereitgestellt werden (170);
• diese Trainings-Beispiele (6) mit dem trainierten Encoder-Netzwerk (1*) in vektorielle Repräsentationen (1a) überführt werden (180);
• diese vektoriellen Repräsentationen (1a) mit dem trainierten Tokenizer-Netzwerk (2*) quantisiert werden (190);
• ausgedünnte Versionen (1a') der vektoriellen Repräsentationen (1a) erzeugt werden (200), indem ein oder mehrere Komponenten maskiert werden;
• diese ausgedünnten Versionen (1a') einem zu trainierenden Transformer-Netzwerk (7) zugeführt werden (210);
• mit einer weiteren Transformer-Kostenfunktion (8) gemessen wird (220), inwieweit die Ausgabe (7a) des zu trainierenden Transformer-Netzwerks (7) die in den ausgedünnten Versionen (1a') maskierten Komponenten enthält, wobei für diese Messung die quantisierten vektoriellen Repräsentationen (2a) herangezogen werden; und
• Parameter (7b), die das Verhalten des zu trainierenden Transformer-Netzwerks (7) charakterisieren, auf das Ziel optimiert werden (230), dass die Bewertung (8a) durch die weitere Transformer-Kostenfunktion (8) verbessert wird.

9. Verfahren (100) nach Anspruch 8, wobei
• weitere Trainings-Beispiele (9) von Punktwolken von Messdaten bereitgestellt werden (240), wobei diese weiteren Trainings-Beispiele (9) mit jeweiligen Soll-Ausgaben (10) gelabelt sind, die das zu trainierende Transformer-Netzwerk (7*) aus ihnen erzeugen soll;
• diese weiteren Trainings-Beispiele (9) von dem zu trainierenden Transformer-Netzwerk (7*) zu Ausgaben (7a) verarbeitet werden (250);
• Abweichungen dieser Ausgaben (7a) von den jeweiligen Soll-Ausgaben (10) mit einer weiteren vorgegebenen Task-Kostenfunktion (11) bewertet werden (260) und
• Parameter (7b), die das Verhalten des zu trainierenden Transformer-Netzwerks (7*) charakterisieren, auf das Ziel optimiert werden (270), dass die Bewertung (11a) durch die weitere Task-Kostenfunktion (11) verbessert wird.

10. Verfahren (100) nach einem der Ansprüche 8 bis 9, wobei ein zu trainierendes Transformer-Netzwerk (7, 7*) gewählt wird (211), das dazu ausgebildet ist,
• einer eingegebenen Punktwolke oder Teilen hiervon Klassifikations-Scores in Bezug auf eine oder mehrere Klassen einer vorgegebenen Klassifikation zuzuordnen; und/oder
• die eingegebene Punktwolke semantisch zu segmentieren; und/oder
• Objekte in der eingegebenen Punktwolke zu erkennen; und/oder
• anhand der eingegebenen Punktwolke mindestens eine Aktion zu identifizieren, die mindestens eine Entität ausführt.

11. Verfahren (100) nach einem der Ansprüche 8 bis 10, wobei
• dem trainierten Transformer-Netzwerk (7**) Punktwolken (3*) von Messdaten zugeführt werden (280), die mit mindestens einem Sensor (12) aufgenommen wurden;
• aus der Ausgabe (7a) des trainierten Transformer-Netzwerks (7**) ein Ansteuersignal (290a) ermittelt wird (290); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (290a) angesteuert wird (300).

12. Verfahren (100) nach Anspruch 11, wobei die Punktwolken (3*) ein räumliches Umfeld, in dem sich das Fahrzeug (50) bzw. der Roboter (60) bewegt, mit einer Ausdehnung von mindestens 50 Metern, bevorzugt von mindestens 100 Metern, in mindestens einer Raumrichtung abdecken (281).

13. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 12 auszuführen.

14. Maschinenlesbarer Datenträger und/oder Downloadprodukt mit dem Computerprogramm nach Anspruch 13.

15. Ein oder mehrere Computer und/oder Compute-Instanzen mit dem Computerprogramm nach Anspruch 13, und/oder mit dem maschinenlesbaren Datenträger und/oder Downloadprodukt nach Anspruch 14.
